# FASCICULE DE BREVET EUROPEEN

(11) **EP 1 625 026 B1**
(45) Date de publication et mention de la délivrance du brevet: **22.09.2010**
(21) Numéro de dépôt: 04742804.0
(22) Date de dépôt: 21.05.2004
(51) Int. Cl.: B60B 3/02

(54) **NOUVELLE ROUE NOTAMMENT EN ALLIAGE LEGER POUR VEHICULE AUTOMOBILE, ET PROCEDE DE FABRICATION D'UNE TELLE ROUE**
LEICHTMETALLFAHRZEUGRAD UND ZUGEHÖRIGES HERSTELLVERFAHREN
NOVEL MOTOR VEHICLE WHEEL WHICH IS MADE, FOR EXAMPLE, FROM LIGHT ALLOY, AND PRODUCTION METHOD THEREOF

(30) Priorité: 21.05.2003 FR 0306090
(43) Date de publication de la demande: 15.02.2006
(73) Titulaire: MONTUPET S.A., F-92110 Clichy (FR)
(72) Inventeur: RABUSSIER, Boris, F-17800 Pons (FR); MEYER, Philippe, F-60600 Ronquerolles (FR); CALLAIS, Thierry, F-60600 Breuil Le Vert (FR)
(74) Mandataire: Le Forestier, Eric
(86) Numéro de dépôt international: PCT/FR2004/001264
(87) Numéro de publication internationale: WO 2004/103730

(56) Documents cités:
- EP-A- 1 112 867
- WO-A-98/47722
- DE-A- 2 824 972
- US-A- 5 018 795
- US-A- 5 651 590

## Description

La présente invention concerne d'une façon générale les roues de véhicules automobiles réalisées par moulage d'alliage léger tel qu'un alliage à base d'aluminium.

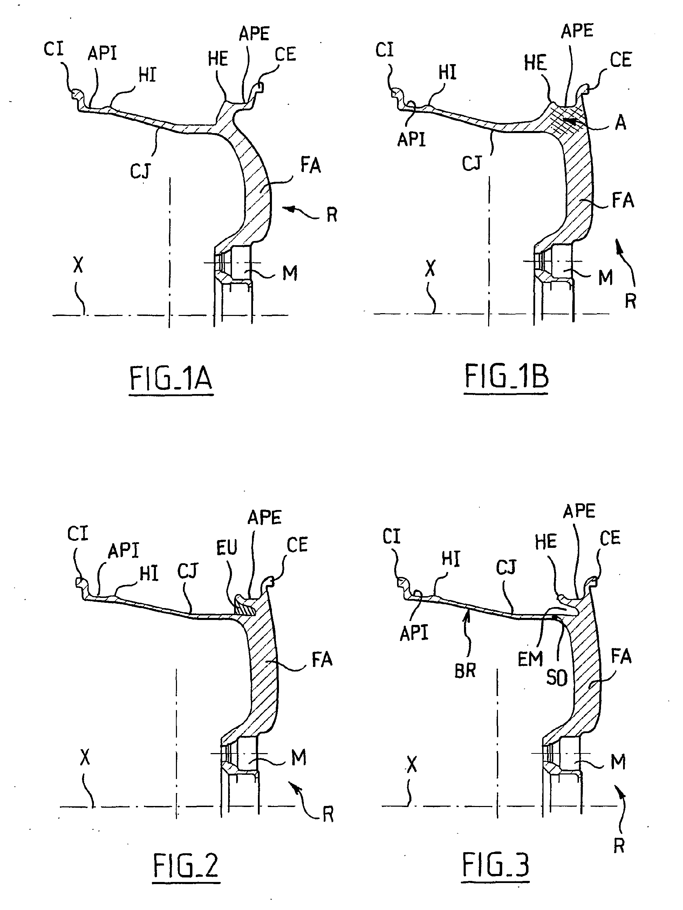

Ainsi la figure 1A des dessins annexés montre en demi-coupe une roue R moulée en alliage léger conventionnelle (X étant l'axe de rotation de la roue), comportant une face avant FA pourvue en son centre d'un moyeu M et de trous de fixation, une partie périphérique de creux de jante CJ, un crochet intérieur CI et un bourrelet anti-déjantage (« hump » en terminologie anglo-saxonne) intérieur HI délimitant entre eux un appui intérieur API pour le pneumatique, et du côté opposé (côté face avant) un crochet extérieur CE et un bourrelet anti-déjantage extérieur HE délimitant entre eux un appui extérieur APE pour le pneumatique.

Il existe de nous jours une tendance à réaliser de telles roues avec un style dit « full face » en terminologie anglo-saxonne, de telles roues étant caractérisés par une face avant FA de style qui est peu décalée, voire pratiquement en tangence avec le crochet de roue extérieur CE. La figure 1B est une demi-coupe d'une telle roue « full face ». On a représenté sur cette même figure une zone A relativement massive qui présente deux inconvénients notables : non seulement elle alourdit la roue, mais en outre, lorsque la roue est réalisée par un procédé classique de coulée en basse pression avec injection du métal à partir du centre de la roue, sensiblement selon l'axe X, elle rend sa solidification plus difficile, avec une tendance à créer des microretassures dans cette zone massive A.

De multiples tentatives ont été effectuées pour tenter de contourner ces inconvénients.

Il est d'abord possible d'usiner des évidements EU sous l'appui extérieur de pneumatique APE comme illustré sur la figure 2 des dessins. Cependant, en raison de la difficulté d'accès, le gain de poids permis par cet évidement est limité ; en outre, la roue restant moulée de façon classique, cette approche ne résout pas le problème précité de la solidification.

Il est également possible de réaliser une roue en deux parties, par exemple comme décrit dans le document FR-A-2 826 609 au nom de la Demanderesse et comme illustré sur la figure 3.

On observe sur cette figure un évidement EM qu'il est alors possible de réaliser au cours du moulage même, et qui peut être discontinu ou continu en direction circonférentielle, sauf au passage du trou de valve où il doit être interrompu.

De plus, le fait que dans cette solution la face avant FA soit moulée à part rend son moulage et la maîtrise de sa qualité plus faciles, et ceci d'autant plus que la suppression des masses au niveau de l'évidement EM permet, dans le cas où la roue est moulée en basse pression avec attaque centrale, de diriger efficacement la solidification vers son centre.

Cette solution présente toutefois certaines limitations :
- la bande de roulement rapportée BR est réalisée en général en alliage de corroyage, plus coûteux que les alliages de moulage, et nécessitant des opérations de transformation complexes ;
- l'étanchéité de la roue et sa tenue en fatigue dépendent fortement de la qualité de la soudure SO entre la face avant et la bande de roulement qui, sur des alliages d'aluminium, peut être parfois délicate à maîtriser ;
- enfin le concept même de cette roue associant par soudage un produit corroyé et une face avant usinée séparément, peut créer un risque de faux rond et de balourd délicat à maîtriser industriellement, surtout si on se compare à une roue moulée monobloc, pratiquement totalement usinée hormis sur sa face avant (voire éventuellement usinée aussi en face avant pour des raisons d'aspect).

On connaît enfin par le document EP 1 112 867 A qui forme l'état de la technique le plus proche selon la préambule de la revendication 1, une roue allégée comportant une partie principale d'un seul tenant formant une face avant et une partie substantielle d'une jante, et comprenant des premiers aménagements pour un premier appui de pneumatique à l'opposé de la face avant, et une pièce annulaire vissée sur la partie principale et comprenant au moins une partie de seconds aménagements pour un deuxième appui de pneumatique côté face avant.

Cette solution connue présente toutefois l'inconvénient de ne pas assurer une étanchéité satisfaisante de la cavité intérieure formée par le pneumatique et la jante.

Plus précisément, la demanderesse à observé que, dans des situations de conduite brutale ou avec une vitesse trop rapide en virage, le talon du pneumatique côté face avant était susceptible de glisser latéralement vers l'intérieur en direction du bossage de retenue. Dans un tel cas, de l'air est susceptible de s'échapper vers l'extérieur en passant au-dessous de la pièce annulaire rapportée, pour aboutir à un dégonflement rapide et dangereux du pneumatique.

La présente invention vise à pallier ces inconvénients de l'état de la technique, et propose à cet effet une roue pour véhicule automobile, **caractérisée en ce qu**'elle comprend en combinaison :
- une partie principale d'un seul tenant formant une face avant et une partie substantielle d'une jante, et comprenant des premiers aménagements pour un premier appui de pneumatique à l'opposé de la face avant, et
- une pièce annulaire rapportée sur la partie principale de façon continue et étanche et comprenant au moins une partie de seconds aménagements pour un deuxième appui de pneumatique côté face avant.

Certains aspects préférés, mais non limitatifs, de cette roue sont les suivants :
- les seconds aménagements pour un second appui de pneumatique comprennent un crochet de pneumatique formé sur la partie principale et un bourrelet anti-déjantage formé sur la pièce rapportée.
- une zone d'appui de pneumatique adjacente au crochet de pneumatique des seconds aménagements est formée sur la partie principale de la roue.
- une zone d'appui de pneumatique adjacente au crochet de pneumatique des seconds aménagements est formée sur la pièce rapportée.
- une zone d'appui de pneumatique adjacente au crochet de pneumatique des seconds aménagements est formée à la fois sur la partie principale de la roue et sur la pièce rapportée.
- une cavité est formée intérieurement au niveau de la pièce rapportée.
- la cavité est formée entre la partie principale et la pièce rapportée.
- la cavité est formée au sein de la pièce rapportée.
- la pièce rapportée est formée d'un seul tenant.
- la pièce rapportée est constituée de plusieurs parties fixées ensemble.
- la pièce rapportée est réalisée en un matériau choisi dans le groupe comprenant les métaux et leurs alliages, les matériaux synthétiques et les matériaux composites.
- la roue comprend des parties d'appui localisées pour la pièce rapportée.
- les parties d'appui sont réalisées d'un seul tenant avec la pièce rapportée.
- la roue comprend une partie d'appui annulaire continue pour la pièce rapportée.
- la partie d'appui annulaire est essentiellement venue de moulage avec la partie principale de la roue.
- la partie d'appui annulaire continue s'étend généralement radialement vers l'extérieur et à distance, en direction axiale, d'un crochet de jante côté face avant appartenant à la partie principale de la roue (de préférence sensiblement au-dessous du bourrelet anti-déjantage).
- dans une direction circonférentielle de la roue, la pièce rapportée est interrompue au niveau d'un bossage de trou de valve.

Selon un deuxième aspect, l'invention propose un procédé de fabrication d'une roue pour véhicule automobile, **caractérisé en ce qu**'il comprend les étapes suivantes :
(a) former d'un seul tenant une partie principale formant une face avant et une partie substantielle d'une jante de la roue, et comprenant des premiers aménagements pour un premier appui de pneumatique, et
(b) rapporter et fixer de façon continue et étanche sur la partie principale une pièce annulaire comprenant au moins une partie de seconds aménagements pour un deuxième appui de pneumatique,
de telle manière que la partie principale peut être amincie et allégée dans la région des seconds aménagements.

Certains aspects préférés de ce procédé sont les suivants :
- l'étape (a) est réalisée par moulage d'alliage léger, suivi d'un usinage de certaines régions de la pièce moulée.
- l'étape (b) est précédée d'une mise en forme de la pièce rapportée par cintrage.
- la pièce annulaire est métallique et fixée sur la partie principale par soudage.
- l'étape de soudage de la pièce annulaire est suivie d'un usinage d'au moins certaines parties de celle-ci.
- la pièce annulaire est obtenue par les étapes suivantes :
   * moulage de la pièce annulaire conjointement avec la partie principale de la roue dans une cavité de moule unique,
   * séparation de la pièce annulaire et de la partie principale après sortie de moule.
- la cavité de moule définit une zone de découpe étroite entre une région principale définissant la partie principale de la roue et une région définissant la pièce annulaire.
- la pièce annulaire est réalisée en matériau organique ou composite et fixée sur la partie principale par collage.
- la pièce annulaire est refermée sur elle-même par soudage.

D'autres aspects, buts et avantages de la présente invention apparaîtront mieux à la lecture de la description suivante de formes de réalisation préférées de celle-ci, donnée à titre d'exemple non limitatif et faite en référence aux dessins annexés sur lesquels :
Les figures 1A, 1B, 2 et 3 illustrent par des demi-vues en coupe radiale différentes roues réalisées totalement ou partiellement par moulage selon l'art antérieur,
La figure 4A est une demi-vue coupe radiale d'une roue selon une première forme de réalisation,
La figure 4B est une vue à échelle agrandie d'un détail de la roue de la figure 4A, selon une variante de réalisation,
La figure 5 illustre à titre d'exemple trois étapes pour former une pièce rapportée appartenant à la roue des figures 4A et 4B,
La figure 6 est une vue en perspective de la roue, illustrant une variante de celle-ci,
Les figures 6A à 6E illustrent une variante de l'invention dans le cas d'un agencement particulier de trou de valve, la figure 6A étant une vue de détail en perspective de la roue avant montage de la pièce rapportée, la figure 6B étant une vue en plan partielle côté opposé à la face avant, et creux de jante omis, la figure 6C étant une vue d'ensemble en perspective avec des éléments d'appui d'une pièce rapportée, et la figure 6E étant une vue de détail en perspective après placement de la pièce rapportée et usinage final,
La figure 7 est une vue en coupe transversale illustrant la même variante que celle de la figure 6, pour mieux illustrer un mode de réalisation particulier d'aménagements d'appui, mais sans illustrer le bossage de trou de valve,
La figure 8 est une vue en perspective illustrant la mise en forme d'une pièce rapportée selon un autre variante encore,
La figure 9 est une vue partielle en coupe radiale d'une autre variante de l'invention,
La figure 10 est une vue à échelle agrandie d'une modification apportée à la variante de la figure 9,
Les figures 11 et 12 sont respectivement une vue partielle en coupe radiale et une vue partielle en élévation d'une autre forme de réalisation d'une pièce rapportée sur une roue conformément à l'invention, et
Les figures 13 à 16 illustrent schématiquement différentes variantes de réalisation de l'invention

On notera à titre préliminaire que, d'une figure à l'autre, des éléments ou parties identiques ou similaires sont désignés dans la mesure du possible par les mêmes signes de référence.

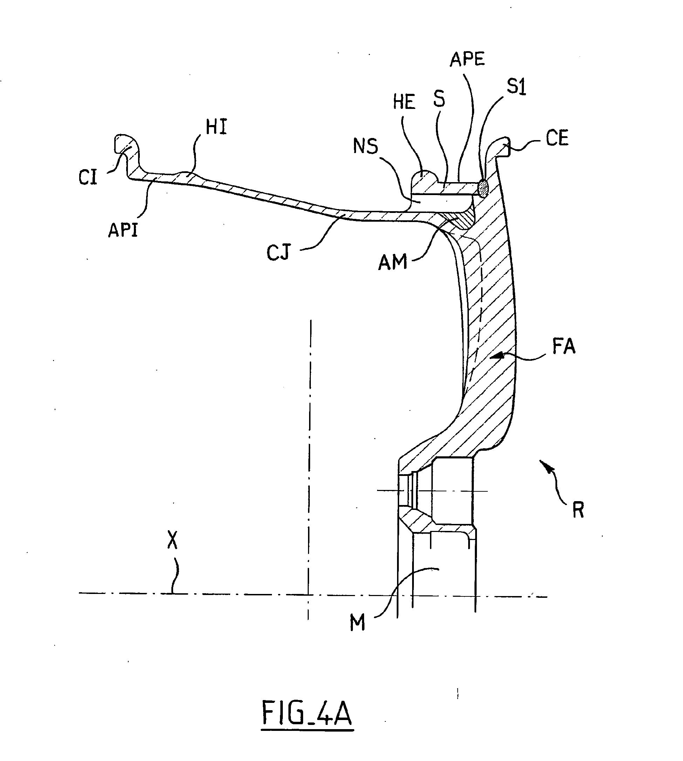

En référence tout d'abord à la figure 4A, on a représenté une roue R sur laquelle on a rapporté par soudage, de façon continue et étanche, une pièce annulaire S formant siège extérieur pour le pneumatique, pièce qui comporte le bourrelet de retenue extérieur HE et tout ou partie de l'appui ou siège extérieur de pneumatique APE.

Cette pièce S est rapportée sur une jante en aluminium moulé comportant la face avant FA se terminant périphériquement par le crochet extérieur CE, le moyeu M, le creux de jante CJ, le bourrelet intérieur HI, l'appui ou siège intérieur du pneumatique API et le crochet intérieur CI.

Dans la forme de réalisation de la figure 4A, le siège S est rapporté et soudé près du crochet CE au niveau d'une soudure S1 continue et étanche, au-dessous de la zone d'appui de pneumatique APE monté et gonflé.

On notera ici que l'invention permet d'accroître l'allègement sous siège venu de moulage, pour l'étendre par exemple à la zone AM hachurée, et de ménager également des allègements entre le siège S et la région de la roue sous-jacente au siège.

Quelque soit le type de soudure utilisé, on réalise de préférence un usinage après soudure. La soudure doit être avec une qualité suffisante pour, au-delà de son caractère continu, éviter des fuites à partir de l'espace intérieur du pneumatique dans les cas extrêmes de conduite où le talon du pneumatique peut se déplacer sur la zone d'appui APE (vers la gauche sur la figure 4A).

Avantageusement, des nervures de soutien NS sont prévues, en étant disposées circonférentiellement et de préférence régulièrement réparties, pour faciliter le montage du pneumatique (en lui évitant notamment de se coincer entre le siège S et la partie du creux de jante sous-jacente) et rigidifier l'appui du siège S.

Dans le cas de la figure 4A, les nervures NS s'étendent sur toute la dimension du siège S parallèlement à l'axe X, et le siège S s'appuie simplement sur ces nervures.

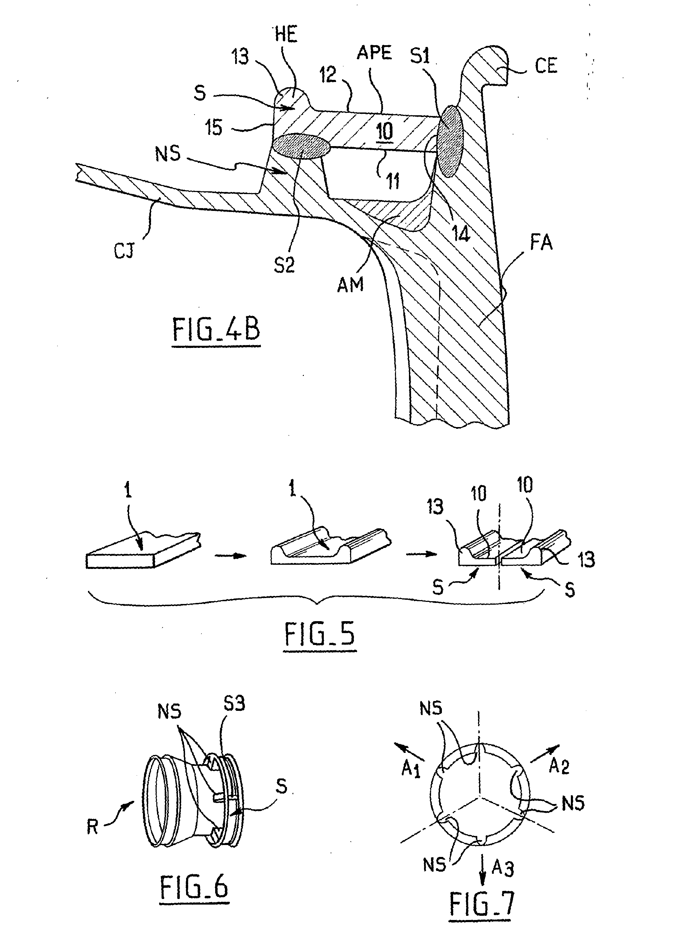

Dans la variante de la figure 4B, la rigidification peut encore être améliorée par une série de soudures S2 au niveau des appuis entre le siège S et les nervures NS. De telles soudures peuvent être réalisées soit dans le plan, soit par transparence à travers la pièce S dans le cas où le matériau et l'épaisseur de celle-ci le permettent. En outre, comme le montre également la figure 4B, les nervures NS peuvent être évidées de manière à s'étendre seulement au niveau de la région du siège S située à l'opposé de la soudure S1.

Comme on l'a représenté sur la figure 4B, le siège S présente une section transversale sous forme d'un corps généralement plat 10 avec une face intérieure 11, une face extérieure 12 constituant tout ou partie de l'appui de pneumatique extérieur APE, une face intérieure 15 au droit de laquelle le bourrelet extérieur 13 (HE) est formé, et une face extérieure 14 au niveau de laquelle la soudure S1 est réalisée. On notera ici que, selon la position de ladite soudure S1 selon l'axe X, le pneumatique gonflé et en position normale de roulage, situé au contact du crochet de jante CE, pourra s'appuyer soit à cheval sur la partie principale de la roue et sur la partie rapportée S, c'est-à-dire au droit de la soudure S1, soit uniquement sur la partie principale, soit enfin uniquement sur la partie rapportée S.

Le siège S peut être réalisé de diverses façons.

Il peut être en particulier obtenu, comme illustré sur la figure 5, à partir d'une bande 1 d'alliage d'aluminium (par exemple en alliage Al/Mg des séries standard 5000), laminée puis refendue pour former deux pièces S avec leurs bourrelets respectifs 13.

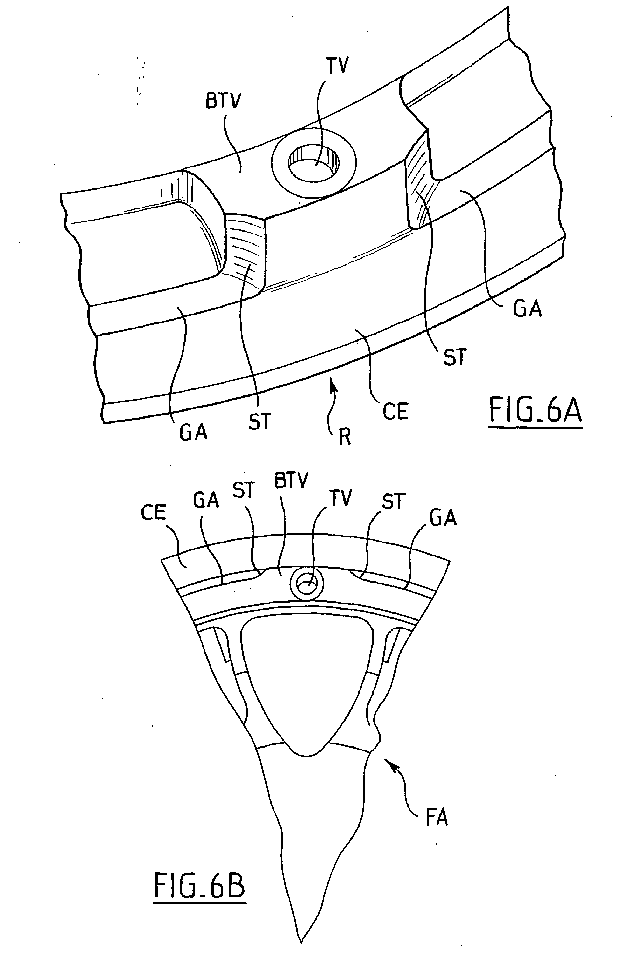

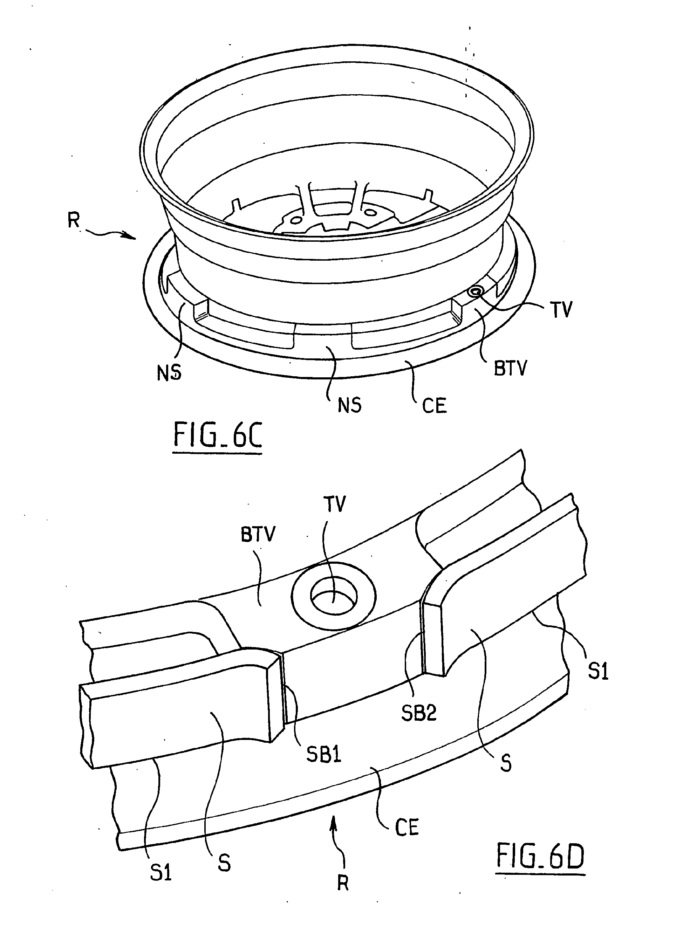

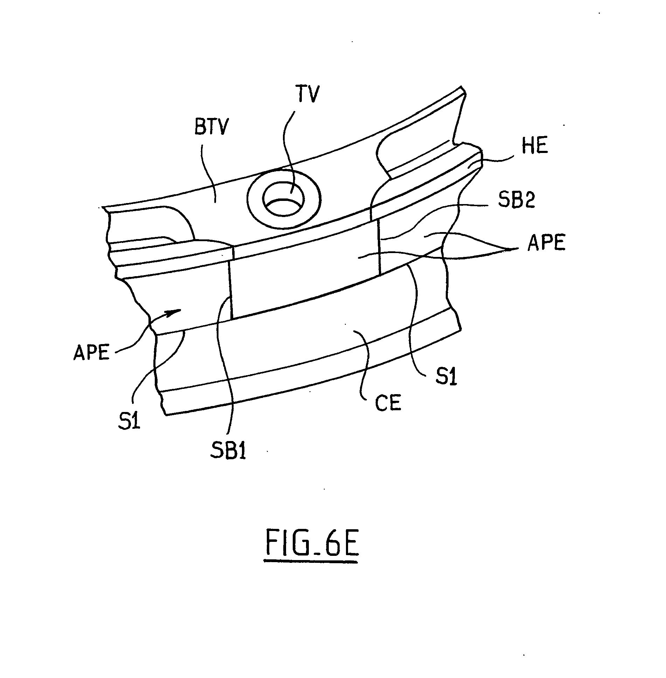

La pièce fait ensuite l'objet d'un cintrage avant d'être montée sur les nervures de support NS, et sur la face avant FA usinée pour la recevoir, puis soudée à sa jonction avec elle-même en S3 comme illustré sur la figure 6.

En variante, on peut utiliser pour le siège S par exemple une pièce profilée, moulée ou extrudée. On peut encore utiliser une tôle de largeur et d'épaisseur appropriées, mais sans relief particulier, et lui donner le relief souhaité par usinage après soudage sur le reste de la roue.

Dans le cas où les contraintes de style et de dessin de la roue, et notamment celles d'un profil de roue standard émanant d'un organisme tel que l'ETRTO (European Tyre and Rim Technical Organisation) ne laissent pas suffisamment de place pour prévoir un bossage de trou de valve tel qu'il existe suffisamment de matière moulée entre le trou de valve et l'appui de la pièce rapportée S, il est alors nécessaire d'interrompre ladite pièce rapportée à chaque extrémité du bossage de trou de valve et de prévoir une autre technologie d'assemblage.

Les figures 6A à 6E des dessins illustrent par différentes vues une telle mise en oeuvre de l'invention.

Les étapes de réalisation de cette roue sont les suivantes : après moulage et tournage de la roue, une gorge GA est réalisée par fraisage comme illustré sur les figures 6A et 6B en particulier. Cette gorge est interrompue au niveau d'un bossage de trou de valve BTV abritant un trou de valve TV, en laissant deux surfaces de transition courbes ST correspondant au rayon de la fraise utilisée.

La figure 6C montre la roue (avant de rapporter le siège S) ainsi obtenue, et montre également les nervures de support NS venues de moulage.

La pièce rapportée S est ensuite appliquée dans la gorge GA et soudée à l'aide d'une part de la soudure périphérique S1 entre la pièce S et la face avant, et d'autre part de soudures de bord SB1 et SB2 (voir figures 6B et 6D) prévues aux extrémités de la pièce S, au niveau des surfaces de transition ST de la gorge GA, où la pièce S est cintrée pour épouser ces surfaces. On peut également ici, comme dans le cas de la figure 4B, réaliser une soudure S2 entre le siège S et chacune des nervures de support NS. On notera que sur la figure 6D, l'épaisseur des soudures n'a pas été représentée par souci de simplification de l'illustration.

Un usinage de finition est ensuite réalisé pour aboutir à une surface lisse et continue, représentée sur la figure 6E (les soudures SB1 et SB2 étant signalées sur cette figure par un simple trait transversal compte-tenu de leur très faible épaisseur réelle), qui s'étend entre le bourrelet extérieur HE d'une part et l'appui extérieur APE ainsi que le crochet extérieur CE d'autre part.

Cette variante permet ainsi de recourir à une pièce rapportée S conformément à l'invention même dans le cas où le bossage de trou de valve BTV a une géométrie telle qu'il empêche la pièce rapportée S de passer à l'extérieur de celui-ci.

Les nervures NS sont réalisées de préférence par les chapes du moule, par exemple selon la figure 7 pour un moule à trois chapes en vue en plan. Sur cette même figure, les axes A1, A2 et A3 décrivent les trois axes de démoulage des chapes du moule, de façon classique en soi.

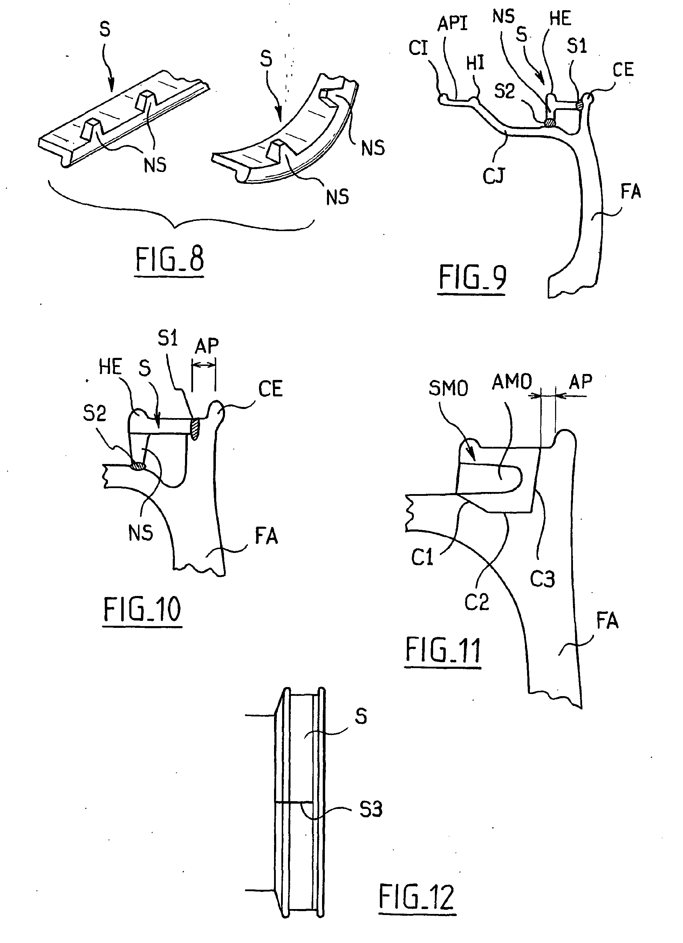

Il est également possible en variante de réaliser les nervures NS d'un seul tenant avec le siège S. Ainsi, comme illustré sur la figure 8, le siège est par exemple fabriqué par un procédé de moulage sous pression, réalisant ainsi une ébauche plane du siège qui est ensuite cintrée et assemblée sur la roue avant d'être soudée.

L'assemblage obtenu est représenté sur la figure 9.

Cette solution présente l'avantage de réaliser les nervures NS avec un seul élément d'outillage, et donc de réaliser les nervures d'une façon géométriquement reproductible et plus favorable à la maîtrise du balourd que dans le cas où les nervures sont réalisées par les chapes (notamment les nervures formées à la jonction entre deux chapes).

Une variante de ces solutions est illustrée sur la figure 10. Dans cette variante, on prend soin de réaliser la soudure en dehors la zone AP de l'appui APE lorsque le pneumatique est monté et gonflé, ce qui rend la maîtrise de la soudure en affleurement moins critique.

Les mêmes options que celles décrites précédemment en relation avec la figure 4 peuvent s'appliquer à la variante de la figure 10.

Pour ce qui concerne la technologie de soudage de l'aluminium, on choisit de préférence le bombardement d'électrons, mais les technologies TIG (« Tungsten Inert Gas » en terminologie anglo-saxonne), MIG (« Metal Inert Gas » en terminologie anglo-saxonne) ou laser, combinées entre elles ou non, sont également possibles. Dans certains cas, on peut avec cette configuration d'assemblage, envisager de se passer d'un usinage complet de la pièce rapportée S après soudure.

Selon une autre variante de réalisation, et en référence aux figures 11 et 12, le siège rapporté est réalisé sous forme d'une pièce SMO en un matériau organique, et par exemple par moulage de polyamide PA 66 chargé de fibres de verre, puis monté dans une cavité conformée de façon complémentaire autour de la jante en aluminium et assemblé par soudure. On notera ici que, de préférence, cette pièce SMO présente une section en forme générale de « U », avec une cavité ouverte vers le côté intérieur de la roue et séparant une partie radialement extérieure formant le bourrelet HE et le cas échéant tout ou partie de l'appui de pneumatique, et une partie intérieure s'appuyant dans la cavité formée à cet effet au niveau des faces C1 et C2, la base du « U » s'appuyant latéralement sur la face C3.

La soudure S3 de la bande de matériau organique SMO sur elle-même (figure 12) peut être soit unique, soit réalisée au niveau de chaque joint de chape de la roue de façon à faciliter en ce cas l'appui de chaque segment de la pièce SMO au fond de sa cavité. Cette cavité est réalisée de préférence brute de moulage par les chapes du moule servant à réaliser la partie principale de la roue, chapes qui correspondent aux surfaces C1 et C2 de la figure 11.

La soudure du matériau organique de la pièce SMO sur la partie principale est réalisée de façon étanche de façon à éviter les fuites d'air dans les cas extrêmes de roulage où le pneumatique peut être amené à se déplacer sur son appui APE. La région d'appui de pneumatique (AP sur la figure 11) en position normale peut être soit sur la partie principale en aluminium de la roue, sur la pièce SMO, soit à cheval sur les deux. En toute hypothèse, le collage de la pièce SMO sur la pièce principale en aluminium est réalisé de préférence au niveau des faces C1, C2, et C3 de la pièce SMO, et façon à obtenir l'étanchéité la meilleure possible.

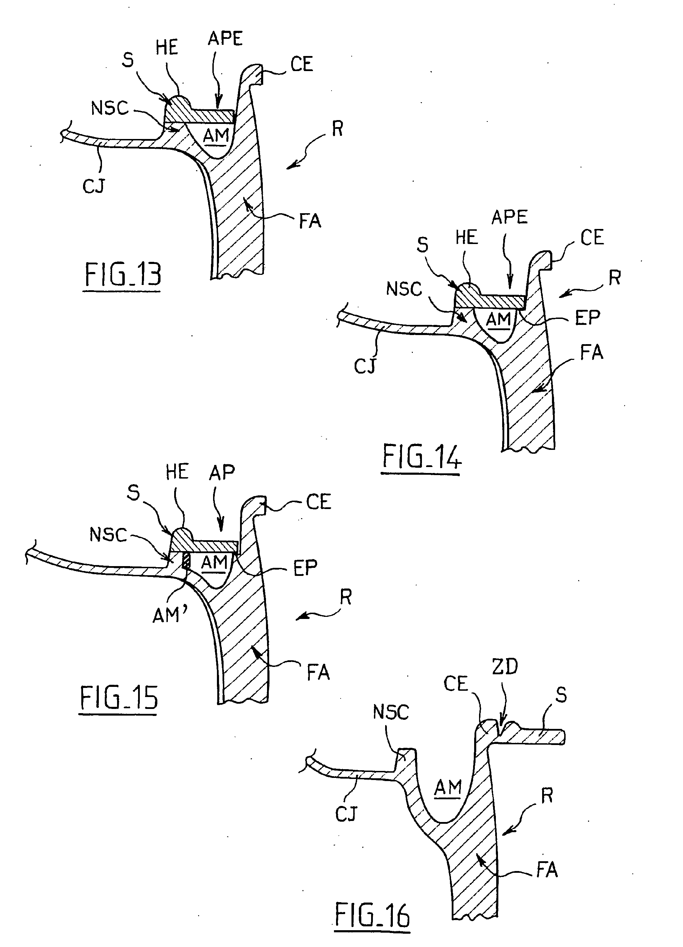

On va maintenant décrire en référence aux figures 13 à 16 différentes variantes de réalisation de l'invention, applicables tout particulièrement au cas où la pièce rapportée S est une bande métallique cintrée.

Dans la variante de la figure 13, on réalise un appui radial pour la pièce rapportée S lors du moulage de la partie principale de la roue, en formant une unique nervure de soutien circonférentielle continue NSC. On notera ici que la réalisation de cette nervure ne vient pas grandement perturber la conception du moule et les opérations de moulage/démoulage. Une cavité d'allègement AM est formée entre la nervure NSC et la zone du crochet extérieur CE.

La pièce S est soudée d'une part sur cette nervure NSC, et/ou d'autre part sur la face de la partie principale située en retrait du crochet de jante extérieur CE.

Au moins l'une de ces deux soudures est réalisée de façon étanche de façon à éviter les pertes de pression en conditions extrêmes de roulage avec déplacement latéral du talon de pneumatique. Par exemple, la soudure contre la zone de crochet de jante extérieur CE est soudée de façon continue, et la soudure sur la nervure NSC s'effectue de façon discontinue, par exemple ponctuellement, le cas échéant à travers le bossage HE si celui-ci n'est pas trop épais.

Pour ce qui concerne l'agencement du trou de valve, plusieurs approches peuvent être envisagées, selon l'endroit où la continuité et l'étanchéité du soudage est réalisée. Dans le cas du paragraphe qui précède, on peut par exemple fixer la valve dans la paroi de la face avant de la roue au voisinage du crochet CE, et prévoir un trou pour la circulation d'air dans la nervure continue NSC.

La figure 14 illustre une mise en oeuvre de cette variante où le positionnement du siège S est facilité par un épaulement EP venu de moulage au niveau de la surface de la partie principale située en retrait du crochet de jante CE.

La figure 15 illustre une mise en oeuvre de cette variante où un allègement supplémentaire de la partie principale de la roue est réalisé en enlevant par usinage (de préférence par tournage) un surcroît de matière AM' au niveau de l'évidement d'allègement AM s'étendant entre la nervure de soutien circonférentielle NSC et la paroi adjacente à la face avant, pour alléger la roue encore davantage.

On observera que, dans les configurations des figures 13 à 15, la géométrie finale de la roue selon l'invention est identique où en tout cas très similaire à la géométrie d'une roue classique côté cavité du pneumatique dans les zones CE, APE, HE, S, NSC et CJ, ce qui permet de monter le pneumatique dans les mêmes conditions que pour une roue classique monobloc.

Enfin la figure 16 illustre un exemple particulier de réalisation de la pièce S, où celle-ci est moulée en même temps que la roue. Plus précisément, la cavité de moule destinée à former la roue est complétée par une cavité, adjacente ici à la zone de crochet extérieur CE, permettant de former une pièce S en forme de bande annulaire dont le diamètre est proche du diamètre qu'elle doit avoir pour être soudée à son emplacement comme décrit plus haut.

Avantageusement, la bande S est usinée en vue de la préparer pour la soudure, avant séparation du reste de la roue. Une zone de découpe étroite ZD peut être définie par la cavité de moule de manière à faciliter la séparation entre la roue elle-même et la pièce S.

Après découpe, la longueur circonférentielle de la bande est si nécessaire ajustée dans le cas où elle doit subir une diminution de diamètre. Elle est ensuite placée sur ses appuis comme décrit dans ce qui précède et soudée en place de façon continue et étanche.

Cette solution permet de diminuer le coût de revient d'obtention de la pièce rapportée S et donc le prix de revient global de la roue. En outre l'identité de matériaux entre la roue elle-même et cette pièce rapportée permet de simplifier la problématique du soudage.

On observera ici que cette technique d'obtention de la pièce rapportée S au cours de l'opération de moulage de la roue peut être mise en oeuvre avec l'une quelconque des géométries d'appui décrites dans ce qui précède.

En outre, on peut pour le moulage disposer la pièce S par rapport à la partie principale de la roue en des endroits autres que la région du crochet extérieur CE (et par exemple dans la région du crochet intérieur CI).

On notera que dans tous les exemples ci-dessus, la partie principale monolithique de la roue (moyeu, face avant, creux de jante et aménagements côté intérieur CI, API et HI) est réalisée par moulage d'une seule pièce en aluminium et usinage (hormis les surfaces brutes de la face avant, les évidements AM sous la partie siège S et les aménagements voisins tels que les nervures NS, et les évidements en face arrière), ce qui garantit une excellente maîtrise dimensionnelle et permet donc de minimiser le balourd et le faux rond.

On notera en outre qu'aucun effort mécanique important ne transite dans les soudures entre la partie principale de la roue et la pièce rapportée pendant le fonctionnement normal de la roue, ce qui rend la maîtrise de la soudure moins critique que dans le cas d'une roue réalisée conformément à la figure 3.

En outre, les évidements réalisés dans la partie principale de la roue sont obtenus directement lors du moulage, ce qui facilite sa réalisation et en particulier permet d'éviter la présence de zones trop massives sujettes aux microretassures (en zone A sur la figure 1B) lorsque la roue est réalisée par moulage d'un seul tenant.

La roue selon l'invention peut s'utiliser avec des matériaux peu coûteux, à savoir :
- des alliages légers de moulage,
- des matériaux organiques,
- et le cas échéant, des matériaux de corroyage en quantité très faible.

De façon générale, l'invention permet de pousser l'allégement au maximum, soit par usinage dans la zone A de la figure 1B, soit de préférence directement au cours du moulage de la roue, ce qui rend l'alimentation de la roue en cours de solidification plus facile et permet également de réduire l'épaisseur des bras.

En variante, on peut parfaitement réaliser la partie principale de la roue par d'autres technologiques telles que le forgeage ou le moulage-forgeage, avec le cas échéant un traitement thermique avant de rapporter le siège S.

Pour ce qui concerne ce dernier, on a vu qu'il pouvait être réalisé en une seule ou plusieurs parties, à partir de pièces moulées, de feuilles ou de profilés qui sont de préférence initialement rectilignes et cintrés avant assemblage. Le matériau du siège est métallique, synthétique ou composite.

## Revendications

1. Roue pour véhicule automobile, comprenant:
- une partie principale d'un seul tenant formant une face avant (FA) et une partie substantielle d'une jante (CJ), et comprenant des premiers aménagements (CI, API, HI) pour un premier appui de pneumatique à l'opposé de la face avant, **caractérisée en ce qu'**elle comprend en combinaison
- une pièce annulaire (S ; SMO) rapportée sur la partie principale de façon continue et étanche et comprenant au moins une partie (HE ; HE, APE) de seconds aménagements pour un deuxième appui de pneumatique côté face avant.

2. Roue selon la revendication 1, **caractérisée en ce que** les seconds aménagements pour un second appui de pneumatique comprennent un crochet de pneumatique (CE) formé sur la partie principale et un bourrelet anti-déjantage (HE) formé sur la pièce rapportée (S ; SMO).

3. Roue selon la revendication 2, **caractérisée en ce qu'**une zone (APE) pour l'appui du pneumatique en position de roulage normal, adjacente au crochet de pneumatique (CE), des seconds aménagements est formée sur la partie principale de la roue.

4. Roue selon la revendication 2, **caractérisée en ce qu'**une zone (APE) pour l'appui du pneumatique en position de roulage normal, adjacente au crochet de pneumatique (CE), des seconds aménagements est formée sur la pièce rapportée (S).

5. Roue selon la revendication 3, **caractérisée en ce qu'**une zone (APE) pour l'appui du pneumatique en position de roulage normal, adjacente au crochet de pneumatique (CE), des seconds aménagements est formée à la fois sur la partie principale de la roue et sur la pièce rapportée.

6. Roue selon l'une des revendications 1 à 5, **caractérisée en ce qu'**une cavité (AM ; AMO) est formée intérieurement au niveau de la pièce rapportée (S ; SMO).

7. Roue selon la revendication 6, **caractérisée en ce que** la cavité (AM) est formée entre la partie principale et la pièce rapportée (S).

8. Roue selon la revendication 6, **caractérisée en ce que** la cavité (AMO) est formée au sein de la pièce rapportée (SMO).

9. Roue selon l'une des revendications 1 à 8, **caractérisée en ce que** la pièce rapportée (S ; SMO) est formée d'un seul tenant.

10. Roue selon l'une des revendications 1 à 8, **caractérisée en ce que** la pièce rapportée (S ; SMO) est constituée de plusieurs parties fixées ensemble.

11. Roue selon l'une des revendications 1 à 10, **caractérisée en ce que** la pièce rapportée (S ; SMO) est réalisée en un matériau choisi dans le groupe comprenant les métaux et leurs alliages, les matériaux synthétiques et les matériaux composites.

12. Roue selon l'une des revendications 1 à 11, **caractérisée en ce qu'**elle comprend des parties (NS) d'appui localisé pour la pièce rapportée (S).

13. Roue selon la revendication 12, **caractérisée en ce que** les parties d'appui (NS) sont réalisées d'un seul tenant avec la pièce rapportée (S).

14. Roue selon l'une des revendications 1 à 11, **caractérisée en ce qu'**elle comprend une partie d'appui annulaire continue pour la pièce rapportée.

15. Roue selon la revendication 14, **caractérisée en ce que** la partie d'appui annulaire est essentiellement venue de moulage avec la partie principale de la roue.

16. Roue selon la revendication 15, **caractérisée en ce que** la partie d'appui annulaire continue s'étend généralement radialement vers l'extérieur et à distance, en direction axiale, d'un crochet de jante côté face avant appartenant à la partie principale de la roue.

17. Roue selon l'une des revendications 1 à 16, **caractérisée en ce que**, dans une direction circonférentielle de la roue, la pièce rapportée (S) est interrompue au niveau d'un bossage de trou de valve (BTV).

18. Procédé de fabrication d'une roue pour véhicule automobile, **caractérisé en ce qu'**il comprend les étapes suivantes :
(a) former d'un seul tenant une partie principale formant une face avant (FA) et une partie substantielle d'une jante (CJ) de la roue, et comprenant des premiers aménagements (CI, API, HI) pour un premier appui de pneumatique, et
(b) rapporter et fixer de façon continue et étanche sur la partie principale une pièce annulaire (S ; SMO) comprenant au moins une partie (HE ; HE, APE) de seconds aménagements pour un deuxième appui de pneumatique.

19. Procédé selon la revendication 18, **caractérisé en ce que** l'étape (a) est réalisée par moulage d'alliage léger, suivi d'un usinage de certaines régions de la pièce moulée.

20. Procédé selon la revendication 18 ou 19, **caractérisé en ce que** l'étape (b) est précédée d'une mise en forme de la pièce rapportée par cintrage.

21. Procédé selon l'une des revendications 18 à 20, **caractérisé en ce que** la pièce annulaire est métallique et fixée sur la partie principale par soudage.

22. Procédé selon l'une des revendications 18 à 21, **caractérisé en ce que** l'étape de soudage de la pièce annulaire est suivie d'un usinage d'au moins certaines parties de celle-ci.

23. Procédé selon la revendication 21, **caractérisé en ce que** la pièce annulaire est obtenue par les étapes suivantes :
- moulage de la pièce annulaire conjointement avec la partie principale de la roue dans une cavité de moule unique,
- séparation de la pièce annulaire et de la partie principale après sortie de moule.

24. Procédé selon la revendication 23, **caractérisé en ce que** la cavité de moule définit une zone de découpe étroite entre une région principale définissant la partie principale de la roue et une région définissant la pièce annulaire.

25. Procédé selon l'une des revendications 18 à 20, **caractérisé en ce que** la pièce annulaire est réalisée en matériau organique ou composite et fixée sur la partie principale par collage.

26. Procédé selon la revendication 25, **caractérisé en ce que** la pièce annulaire est refermée sur elle-même par soudage.

## Claims

1. Motor vehicle wheel comprising:
- a one-piece main portion forming a front face (FA) and a substantial portion of a rim (CJ), and including first arrangements (CI, API, HI) for a first tyre seat at the opposite side from the front face, **characterised in that** it comprises in combination:
- an annular add-on part (S; SMO) fitted to the main portion in continuous and airtight manner and comprising at least a portion of second arrangements (HE; HE, APE) for a second tyre seat on the front face side.

2. Wheel according to claim 1, **characterised in that** the second arrangements for a second tyre seat comprise a rim flange (CE) formed on the main portion and an anti-roll-off hump (HE) formed on the add-on part (S; SMO).

3. Wheel according to claim 2, **characterised in that** a seat zone (APE) for the tyre in the normal running position, adjacent to the rim flange (CE) of the second arrangements, is formed on the main portion of the wheel.

4. Wheel according to claim 2, **characterised in that** a seat zone (APE) for the tyre in the normal running position, adjacent to the rim flange (CE) of the second arrangements, is formed on the add-on part (S).

5. Wheel according to claim 3, **characterised in that** a seat zone (APE) for the tyre in the normal running position, adjacent to the rim flange (CE) of the second arrangements, is formed both on the main portion of the wheel and on the add-on part.

6. Wheel according to any one of claims 1 to 5, **characterised in that** a cavity (AM; AMO) is formed internally at the level of the add-on part (S; SMO).

7. Wheel according to claim 6, **characterised in that** the cavity (AM) is formed between the main portion and the add-on part (S).

8. Wheel according to claim 6, **characterised in that** the cavity (AMO) is formed within the add-on part (SMO).

9. Wheel according to any one of claims 1 to 8, **characterised in that** the add-on part (S; SMO) is made as a single piece.

10. Wheel according to any one of claims 1 to 8, **characterised in that** the add-on part (S; SMO) is made up of a plurality of pieces fastened together.

11. Wheel according to any one of claims 1 to 10, **characterised in that** the add-on part (S; SMO) is made of material selected from the group comprising metals and their alloys, synthetic materials and composite materials.

12. Wheel according to any one of claims 1 to 11, **characterised in that** it comprises localised support portions (NS) for the add-on part (S).

13. Wheel according to claim 12, **characterised in that** the support portions (NS) are produced in a single-piece with the add-on part (S).

14. Wheel according to one of claims 1 to 11, **characterised in that** it comprises a continuous annular support portion for the add-on part.

15. Wheel according to claim 14, **characterised in that** the annular support portion is essentially moulded in one piece with the main portion of the wheel.

16. Wheel according to claim 15, **characterised in that** the continuous annular support portion extends generally radially outwards and at a distance, in the axial direction, from a front face rim flange belonging to the main portion of the wheel.

17. Wheel according to one of claims 1 to 16, **characterised in that**, in a circumferential direction of the wheel, the add-on part (S) is interrupted at a valve hole protrusion (BTV).

18. Method of manufacturing a motor vehicle wheel, **characterised in that** it comprises the following steps:
a) forming as a single piece a main portion forming a front face (FA) and a substantial part of a wheel rim (CJ), and comprising first arrangements (CI, API, HI) for a first tyre seat; and
b) fitting and securing in a continuous and airtight manner on the main portion an annular part (A; SMO) comprising at least a portion (HE; HE, APE) of second arrangements for a second tyre set.

19. Method according to claim 18, **characterised in that** step (a) is implemented by light alloy casting, followed by machining certain regions of the casting.

20. Method according to claim 18 or 19, **characterised in that** step (b) is preceded by forming the add-on part by curving.

21. Method according to one of claims 18 to 20, **characterised in that** the annular part is made of metal and is secured to the main portion by welding.

22. Method according to any one of claims 18 to 21, **characterised in that** the step of welding the annular part is followed by machining at least certain portions thereof.

23. Method according to claim 21, **characterised in that** the annular part is obtained by the following steps:
- casting the annular part together with the main portion of the wheel in a single mould cavity,
- separating the annular part from the main portion after they have been extracted from the mould.

24. Method according to claim 23, **characterised in that** the mould cavity defines a narrow cutting zone between a main region defining the main portion of the wheel and a region defining the annular part.

25. Method according to one of claims 18 to 20, **characterised in that** the annular part is made of organic or composite material and is secured to the main portion by adhesive bonding.

26. Method according to claim 25, **characterised in that** the annular part is closed on itself by welding.

## Patentansprüche

1. Reifen für Automobilfahrzeug bestehend aus :
- einem Hauptbauteil aus einem Stück, das eine Vorderseite (FA) bildet und einen wesentlichen Teil einer Felge (CJ), und bestehend aus den ersten Anordnungen (CI, API, HI) für eine erste Reifenauflage, die der Vorderseite gegenüberliegt, **dadurch gekennzeichnet, dass** es aus einer Kombination besteht:
- ein ringförmiges Bauteil (S; SMO), das auf das Hauptbauteil mit einem glatten Übergang und dicht angebracht ist und zumindest ein Bauteil (HE; HE, APE) der zweiten Anordnungen für eine zweite Reifenauflage auf der Vorderseite aufweist.

2. Reifen nach Anforderung 1, **dadurch gekennzeichnet, dass** die zweiten Anordnungen für eine zweite Reifenauflage einen Reifenhaken (CE) beinhaltet, der auf dem Hauptbauteil gebildet ist und einen Randwulst gegen das Entreifen (HE) beinhaltet, der auf dem angebauten Bauteil (S; SMO) gebildet ist.

3. Reifen nach Anforderung 2, **dadurch gekennzeichnet, dass** ein Bereich (APE) auf dem Reifenhauptteil in normaler Rollposition, an den Reifenhaken (CE) angrenzend, für die zweite Anordnungseinheit gebildet wird.

4. Reifen nach Anforderung 2, **dadurch gekennzeichnet, dass** ein Bereich (APE) für die Reifenauflage in normaler Rollposition, an den Reifenhaken (CE) angrenzend, für die zweite Anordnungseinheit auf dem angebrachten Bauteil (S) gebildet wird.

5. Reifen nach Anspruch 3, **dadurch gekennzeichnet, dass** ein Bereich (APE) für die Reifenauflage in normaler Rollposition, an den Reifenhaken (CE) angrenzend, eine zweite Anordnungseinheit gebildet wird, die gleichzeitig auf dem Hauptbauteil des Reifens und dem angebrachten Bauteil gebildet wird.

6. Reifen nach einem der Ansprüche 1 bis 5, **dadurch gekennzeichnet, dass** eine Aussparung (AM; AMO) im Innern auf dem angebrachten Bauteil (S; SMO) gebildet wird.

7. Reifen nach Anspruch 6, **dadurch gekennzeichnet, dass** sich die Aussparung (AM) zwischen dem Hauptbauteil und dem angebrachten Bauteil (S) befindet.

8. Reifen nach Anspruch 6, **dadurch gekennzeichnet, dass** sich die Aussparung (AMO) in dem angebrachten Bauteil (SMO) befindet.

9. Reifen nach einem der Ansprüche 1 bis 8, **dadurch gekennzeichnet, dass** das angebrachte Bauteil (S; SMO) aus einer einzigen Einheit besteht.

10. Reifen nach einem der Ansprüche 1 bis 8, **dadurch gekennzeichnet, dass** das angebrachte Bauteil (S; SMO) aus mehreren zusammen befestigten Baueinheiten besteht.

11. Reifen nach einem der Ansprüche 1 bis 10, **dadurch gekennzeichnet, dass** das angebrachte Bauteil (S; SMO) aus einem Werkstoff hergestellt wird, das aus der Gruppe gewählt wird, die aus Metallen und ihren Legierungen, der synthetischen und Kompositwerkstoffe besteht.

12. Reifen nach einem der Anspüche 1 bis 11, **dadurch gekennzeichnet, dass** er die Teile (NS) der lokalen Auflage für das angebrachte Bauteil (S) beinhaltet.

13. Reifen nach Anspruch 12, **dadurch gekennzeichnet, dass** die Auflageteile (NS) aus einer einzigen Einheit mit dem angebrachten Bauteil (S) hergestellt werden.

14. Reifen nach einem der Ansprüche 1 bis 11, **dadurch gekennzeichnet, dass** er ein durchgehendes ringförmiges Auflageteil für das angebrachte Bauteil beinhaltet.

15. Reifen nach Anspuch 14, **dadurch gekennzeichnet, dass** das ringförmige Auflageteil im Wesentlichen aus dem Formguß des Reifenhauptteils stammt.

16. Reifen nach Anspruch 15, **dadurch gekennzeichnet, dass** das durchgehende, ringförmige Auflagenteil sich im Allgemeinen radial nach außen ausdehnt und in axialer Richtung in einem Abstand, durch eine Wasserablaufrinne auf der Vorderseite, die zum Reifenhauptteil gehört.

17. Reifen nach einem der Ansprüche 1 bis 16, **dadurch gekennzeichnet, dass** in reifenumlaufender Richtung, das angebrachte Bauteil (S) an dem Randwulst des Ventillochs (BTV) unterbrochen ist.

18. Herstellungsverfahren eines Reifens für ein Automobilfahrzeug, **dadurch gekennzeichnet, dass** es aus den folgenden Schritten besteht:
(a) Bildung einer einzigen Einheit aus dem Hauptteil, das die Vorderseite (FA) besteht und einem wesentlichen Teil der Felge (CJ) des Reifens und aus den ersten Anordnungen (CI, API, HI) für eine erste Reifenauflage besteht und
(b) ein ringförmiges Teil (S; SMO) mit glattem Übergang und dicht auf dem Hauptbauteil befestigt, anbringen, bestehend aus zumindest einem Teil (HE; HE, APE) der zweiten Anordnungen für eine zweite Auflage des Reifens.

19. Verfahren nach Anspruch 18, **dadurch gekennzeichnet, dass** der Schritt (a) durch Guß einer Leichtmetalllegierung mit anschließender Bearbeitung gewisser Bereiche des geformten Bauteils ausgeführt wird.

20. Verfahren nach Anspruch 18 oder 19, **dadurch gekennzeichnet, dass** dem Schritt (b) eine Formgebung durch Rundbiegen des angebrachten Bauteils vorangeht.

21. Verfahren nach einem der Ansprüche 18 bis 20, **dadurch gekennzeichnet, dass** das ringförmige Bauteil aus Metall besteht und auf dem Hauptbauteil mittels Schweißverfahren angebracht wird.

22. Verfahren nach einem der Ansprüche 18 bis 21, **dadurch gekennzeichnet, dass** der Schweißarbeit des ringförmigen Bauteils eine Nachbearbeitung zumindest gewisser Bereiche dieses Bauteils folgt.

23. Verfahren nach Anspruch 21, **dadurch gekennzeichnet, dass** das ringförmige Bauteil in den nachfolgenden Arbeitsschritten erstellt wird:
- gemeinsamer Formguss des ringförmigen Bauteils und des Hauptbauteils des Reifens in einer einzigen Hohlraumform,
- Trenung des ringförmigen Bauteils und des Hauptbauteils nach dem Herausnehmen aus der Form.

24. Verfahren nach Anspruch 23, **dadurch gekennzeichnet, dass** die Hohlraumform eine schmale Schneidzone zwischen dem Bereich, der das Hauptteil des Reifen darstellt und einem Bereich, der das ringförmige Teil definiert, aufweist.

25. Verfahren nach einem der Ansprüche 18 bis 20, **dadurch gekennzeichnet, dass** das ringförmige Bauteil aus einem organischen oder Komposit-Werkstoff hergestellt wird und auf dem Hauptbauteil durch Kleben befestigt wird.

26. Verfahren nach Anspruch 25, **dadurch gekennzeichnet, dass** das ringförmige Bauteil durch Schweißen in sich selbst geschlossen wird.
